**Europäisches Patentamt**

**European Patent Office**

**Office européen des brevets**

(11) Publication number: **0 174 705**
**B1**

# EUROPEAN PATENT SPECIFICATION

(45) Date of publication of patent specification: **08.02.89**

(51) Int. Cl.⁴: **G 11 B 33/14, G 11 B 23/50**

(21) Application number: **85301494.2**

(22) Date of filing: **05.03.85**

(54) Disk drive apparatus.

(30) Priority: **04.09.84 US 646537**

(43) Date of publication of application:
**19.03.86 Bulletin 86/12**

(45) Publication of the grant of the patent:
**08.02.89 Bulletin 89/06**

(84) Designated Contracting States:
**DE FR GB**

(56) References cited:
**EP-A-0 098 007**
**US-A-4 418 369**

**PATENT ABSTRACTS OF JAPAN, vol. 5, no. 175 (P-88)847r, 11th November 1981; & JP - A - 56 105 377**

**PATENT ABSTRACTS OF JAPAN, vol. 7, no. 212 (P-224)1357r, 20th September 1983; JP - A - 58 105 470**

(73) Proprietor: **MAGNETIC PERIPHERALS INC.**
**8100-34th Avenue South**
**Minneapolis Minnesota 55440 (US)**

(72) Inventor: **Gitzendanner, Louis George**
**4949 North West 31 Terrace**
**Oklahoma City Oklahoma 73122 (US)**

(74) Representative: **Caro, William Egerton et al**
**J. MILLER & CO. Lincoln House 296-302 High Holborn**
**London WC1V 7JH (GB)**

(56) References cited:
**PATENT ABSTRACTS OF JAPAN, vol. 7, no. 196 (P-219)1341r, 26th August 1983; & JP - A - 58 094 175**

**PATENT ABSTRACTS OF JAPAN, vol. 7, no. 146 (P-206)1291r, 25th June 1983; & JP - A - 58 056 269**

**PATENT ABSTRACTS OF JAPAN, vol. 7, no. 184 (P-216)1329r, 13th August 1983; & JP - A - 58 085 977**

Courier Press, Leamington Spa, England.

## Description

This invention relates to disk drive apparatus.

Many disk drive apparatus permit flying heads to land on a magnetic disk when rotation of the disk is stopped, rather than retracting heads from the disk while it is still rotating. However, if the heads rest on the disk, humidity within the disk drive apparatus causes striction between the heads and the disk, impeding restart of the disk drive apparatus. Damage to the disk and the heads can occur upon restart under conditions of high stiction.

One technique for reducing humidity within the disk drive apparatus is to construct it so that the disk is in a sealed compartment, and a desiccant is provided within the compartment to absorb water vapour. However, pressure changes both inside and outside the compartment could damage a fluid shaft seal on a spindle motor of the disk drive apparatus if the pressure differential exceeds, typically, 0.4 psi (28 g/cm²). Therefore, a vent is necessary to equilibrate pressure between the inside and outside of the compartment.

As the disk drive apparatus heats up during periods of usage and cools down during periods of non-usage, air is exhausted and ingested through the vent. As air is ingested during cooling down periods, water vapour may be carried into the compartment. Further, if the partial pressure of water vapour within the compartment is less than the partial pressure of water vapour in the atmosphere surrounding the compartment, water vapour will diffuse into the compartment through the vent.

One successful humidity control has been the employment of a desiccant within the disk drive apparatus in sufficient quantity as to absorb part of the water vapour ingested into the disk drive apparatus during cooling down periods. When the air and desiccant are in moisture equilibrium, the relative humidity of the air my be expressed as a function of the amount of water in the desiccant (per unit weight of desiccant). Therefore, for a given quantity of desiccant, the number of cooling down cycles available before the relative humidity of the air exceeds a predetermined value is limited. For example, if a disk drive apparatus operates in an atmosphere of 90% relative humidity at 86°F (30°C) 1 in³ (16.4 cm³) of desiccant would control relative humidity to below 30% through approximately 1,300 cooling down cycles. Each time the disk drive apparatus cycles on and off, it goes through a thermal excursion of about 50°F (28°C). Thus, on cooling down, a disk drive apparatus might ingest approximately 4 in³ (65.6 cm³) of air containing about 1.8 mg of water. Considering only moisture ingested during cooling down cycles (i.e. neglecting moisture entering by diffusion). 1 in³ (16.4 cm³) of commercially available desiccant, capable of absorbing approximately 2.4 g of water, will maintain the air in the disk drive apparatus below 30% relative humidity for approximatley 1,300 cycles. After 1,300 cycles the desiccant/air moisture equilibrium will exceed 30% relative humidity, and the relative humidity in the disk drive apparatus will exceed 30%.

A ventilation and filtration system and method for disk drive apparatus is disclosed in US—A—4,418,369, in which a housing encloses rotatable disks and one or more heads for reading and/or writing data on the disks. Ventilation and filtration is effected through a vent tube having an end outside the housing and an end within the housing, the vent tube providing fluid communication between atmosphere and the interior of the housing and having a filter at its end outside the housing, through which fluid passes into the vent tube. The vent tube end within the housing opens into the space adjacent a spindle by which the disks are driven, so that atmospheric pressure is established in a region whose pressure would otherwise be reduced to the centrifugal effect upon the surrounding air arising from rotation of the disk at high speed. This establishes a pressure somewhat above atmospheric elsewhere in the housing. All movements of air from the atmosphere into the housing is through the vent tube. No means for moisture removal from such ingested air is described or suggested. Nor is there any indication of the dimensioning of the vent tube to achieve atmospheric pressure at the end within the housing.

The present invention seeks to provide disk drive apparatus in which a reasonably low humidity is maintained, particularly, through repeated thermal excursion cycles. The present invention also seeks to provide disk drive apparatus in which moisture diffusion into the disk drive is inhibited as well as encouraging expelling moisture from the disk drive apparatus to maintain relative humidity to acceptably low limits.

According to the present invention there is provided a disk drive apparatus having a housing containing a rotatable disk and one or more heads for reading and/or writing data on the disk, a vent tube having an end outside the housing and an end within the housing, the vent tube providing fluid communication between atmosphere surrounding the housing and the interior of the housing, characterised in that the vent tube has an internal diameter large enough so that the effects of surface tension and friction between air and water vapour flowing in the tube and the surface of the tube are not significant, so that the flow of air and water vapour in the tube is substantially laminar and capillary effects are substantially eliminated, in that the vent tube has a length long enough to minimise the mass flow rate of water vapour from the atmosphere to the interior of the housing, and in that the vent tube is such that, in operation, the pressure gradient across the entire length of the tube is not greater than 7 g/cm² (0.1 psi).

Preferably the internal diameter of the vent tube is at least 0.28 mm (0.11 in) and the length of the vent tube is at least 25 cm (10 in). In the preferred embodiment the internal diameter of the vent tube is substantially 0.33 mm (0.013 in) and the length of the vent tube is substantially 51 cm (20 in). Preferably the length of the vent tube is greater than the diameter of said disk.

The end of the vent tube within the housing may be located in a region unaffected by pressure changes in said housing caused by rotation of the disk.

Preferably the housing includes a first chamber containing the disk and heads, and a second chamber containing the end of the vent tube within the housing. Advantageously, the apparatus includes first and second pressure responsive valve means for selectively providing fluid communication between the first and second chambers, the first pressure responsive valve means, in operation, opening when the fluid pressure in the first chamber exceeds the fluid pressure in the second chamber by a first predetermined amount and closing when the fluid pressure in the first chamber does not exceed the fluid pressure in the second chamber by the first predetermined amount the second pressure responsive valve in operation, opening when the fluid pressure in the second chamber exceeds the fluid pressure in the first chamber by a second predetermined amount and closing when the fluid pressure in the second chamber does not exceed the fluid pressure in the first chamber by the second predetermined amount.

The apparatus may include a desiccant tube within the housing, the desiccant tube being connected to an end of the vent tube in fluid communication with the internal bore of the vent tube, the desiccant tube containing a desiccant material which absorbs water.

The disk drive apparatus may include heater means for expelling water vapour from the desiccant material.

The apparatus may include a port providing fluid communication between the interior of the housing and the atmosphere surrounding the housing, and thermally-responsive valve means for opening fluid communication through the port when the temperature exceeds a given level and for closing fluid communication through the port when the temperature is less than the given level, so that fluid may be expelled from within the housing through the port when the temperature exceeds the given level.

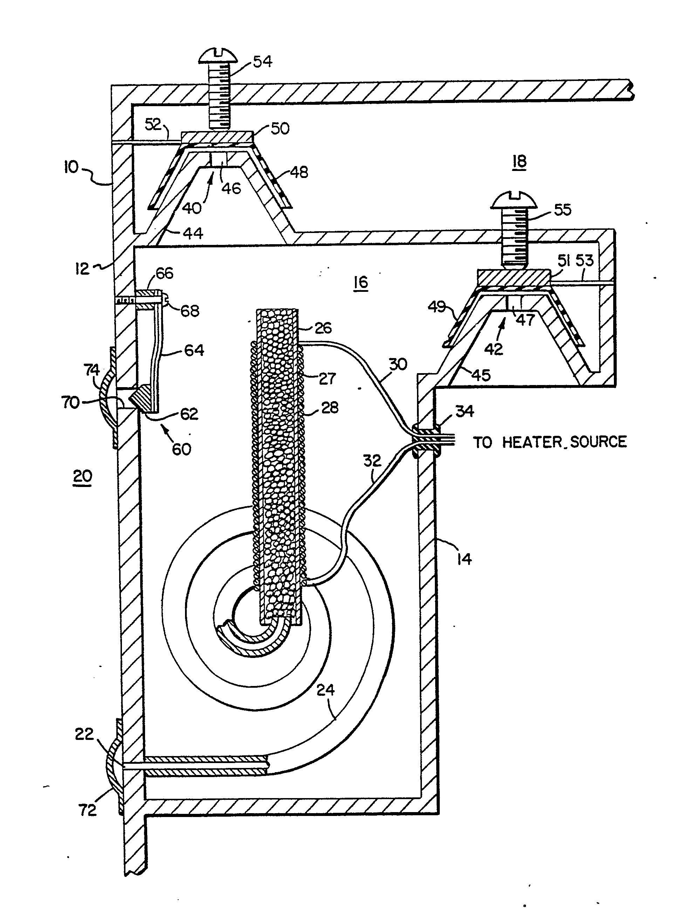

The invention is illustrated, merely by way of example, in the accompanying drawing which is a side view, partially cut away, of a disk drive apparatus according to the present invention.

The drawing shows a housing 10 having an external wall 12 forming a chamber 18 and an internal wall 14 forming a chamber 16 therein. The chamber 16 is separated by the wall 14 from the chamber 18 which is the main chamber of the disk drive apparatus where the magnetic disk and one or more heads for reading and/or writing data on the disk are located. The external wall 12 seals both the chamber 16, 18 from external atmosphere indicated by reference numeral 20.

A port 22 is provided through the wall 12 to provide fluid communication between the atmosphere and the internal bore of a tube 24, positioned within the chamber 16. The free end of the tube 24 is in fluid communication with the inerior bore tube 26, filled with a suitable desiccant 27 such as granular silica gel. The free end of the tube 26 is open to the chamber 16. The tube 26 and the desiccant 27 are hereafter referred to as "a desiccant tube". A heater coil 28 is wound about the periphery of the tube 26 with leads 30, 32 being connected through a seal 34 to electronic circuitry (not shown) of the disk drive apparatus. The tube 26 is preferably constructed of a thermally conductive metal so heat from the coil 28 is transferred to the desiccant 27. The heater may be operated whenever the disk drive apparatus is operated or may be operated under control of a time-delay switch, microprocessor, or other control within the drive circuitry. The tube 24 may be of any convenient shape, but it is important that the length of the tube 24 is great compared to its diameter.

Pressure valves 40, 42 provide fluid communication between the chambers 16, 18. The valve 40 is operable when the pressure within the chamber 16 exceeds the pressure within the chamber 18 by a predetermined amount such as about 0.3 psi (21 g/cm$^2$), whereas the valve 42 is operable to provide fluid communication when the pressure within the chamber 18 exceeds that within chamber 16 by a predetermined amount such as about 0.3 psi (21 g/cm$^2$). One convenient design for the valves 40, 42 is to provide respective frustoconical portions 44, 45 to the wall 14 each having a respective aperture 46, 47. Cone members 48, 49, constructed of suitable rubber or other sealing material are fastened to respective members 50, 51 suspended by leaf springs 52, 53 to the wall 14. Threaded fasteners 54, 55 provide suitable stops for the members 50, 51 respectively to regulate a maximum opening of the valves. The cone members 48, 49 are biased by the springs 52, 53 to be normally closed against the apertures 46, 47. When the pressure within one of the chambers 16, 18 exceeds the pressure in the other chamber by a predetermined amount (e.g. 0.3 psi (21 g/cm$^2$)) one of the valves opens to permit adjustment of the relative pressures.

A needle valve 60 is provided in the wall 12 between the chamber 16 and the atmosphere 20. The needle valve 60 comprises a needle 62 mounted on a bi-metallic strip 64 fastened by a housing 66 to the wall 12 by means of a fastener 68. The needle 62 is operable to open and close a port 70 in the wall 14. When the temperature within the chamber 16 exceeds a predetermined level, the bi-metallic strip 64 operates to open the needle valve 60 to establish fluid communication between the chamber 16 and the atmosphere without causing flow through the tubes 24, 26.

Filters 72, 74 are fastened to the wall 12 over ports 22, 70 respectively to prevent dust and other solid contaminants from entering the ports.

The present invention resides in the provision of means for removing water vapour from a disk drive apparatus of for preventing water vapour from entering the disk drive apparatus, as well as to a combination of these for optimum water vapour control. Thus, the valves 40, 42 serve to seal the chamber 18 (disk drive compartment) from the chamber 16 and the atmosphere when the valves are closed, yet are operable to prevent a pressure differential between the chambers 16, 18 from exceeding a predetermined amount. As a result, less water vapour can diffuse into the chamber 18. The desiccant tube absorbs water vapour in the chamber 16 and the heater 28 is operable to expel water from the desiccant to the atmosphere. The needle valve 60 is operable to open only when the temperature within the chamber 16 rises above a given level such as 160°F (71°C). Since the vapour pressure of water tends to rise with temperature, at 160°F (71°C) the vapour pressure of water in the chamber 16 exceeds that of the atmosphere, resulting in diffusion of water vapour from the chamber 16 through the needle valve 60 to the atmosphere. This action tends to dry out the desiccant 27, the chamber 16, and the chamber 18 if the valve 42 is open.

The tube 24 is a long tube designed to permit the pressure within the chamber 16 to remain essentially at the same pressure as the atmosphere surrounding the housing 10, yet permit as small as practical diffusion of water vapour between atmosphere and the chamber 16. It can be shown that the pressure differential ($\Delta P$) through a tube is proportional to the length (l) of the tube divided by the fourth power of its internal diameter (d):

$$\Delta P \approx \frac{l}{d^4}$$

On the other hand, the diffusion mass flow rate ($\Delta Q$) of water vapour through dry air in a tube is proportional to the square of the internal diameter of the tube divided by its length (l):

$$\Delta Q \approx \frac{d^2}{l}$$

It is desirable to maintain both the pressure differential, $\Delta P$, and the mass flow rate of water vapour, $\Delta Q$, as a possible. It is evident that for a given length of tube, doubling the diameter will reduce the pressure differential by a factor of 16 but will increase the mass flow rate of water vapour by a factor of only 4. Conversely, lengthening a tube will increase the pressure differential and decrease the mass flow rate of water vapour in equal proportions. Therefore, for a given set of parameters associated with a given tube, if the length is increased by 16 fold and the diameter is doubled, the mass flow rate of water vapour by diffusion will be decreased by a factor of 4 whilst the pressure differential is unchanged.

It is evident, therefore, that the tube 24 should be as long as practical and have a diameter great enough as not to create a serious pressure differential. Under the conditions stated, when the valves 40, 42 are used to operate at pressures of 0.3 psi (21 g/cm²), it is desirable that the pressure differential along the tube 24 does not exceed 0.1 psi (7 g/cm²). Assuming a maximum rate of air expulsion of 5 in³/hour (82 cm³/hour) due to thermal excursion of the disk drive apparatus, to maintain a pressure differential smaller than 0.1 psi (7 g/cm²), a tube 10 in (25 cm) in length should have a bore no smaller than 0.011 in (0.278 mm); a tube 20 in (51 cm) in length should have a bore no smaller than 0.013 in (0.330 mm). Tubes with bores greater than minimum may be used, recognising that a sacrifice of water vapour diffusion will occur. For example, it has been found that ordinary surgical tubing (with a bore of about 1/8 in (0.31 cm) diameter) and a length of about 20 to 30 in (25 to 51 cm) would be quite adequate in most applications. (Recognising that disk drive apparatus employ disks with diameters of 5.25 in (13.33 cm), the length of tube 24 will ordinarily be greater than the diameter of the disk). In any event, plastics and metal tubing with bores as small as 0.01 in (0.25 cm) are commercially available and are suitable vent tubes. The granular structure of the desiccant 27 should be chosen so that adequate fluid communication passes through the tube 26.

It is known that as the disk rotates, air currents generated by the rotating disk create pressure changes in the housing. It is preferred that the free end of the tube 26 be located in a position within the housing 10 where the tubes 24, 26 will be unaffected by pressure changes caused by rotation of the disk. Conveniently, the separation of the chamber 16 where the tube 24 terminates from the chamber 18 where the disk is located accomplishes this. The principal features of the tube 24 are that it should have an internal diameter large enough that the effects of surface tension and friction between air and water vapour flowing in the tube and the surface of the tube are not significant and the flow of air and water vapour is substantially laminar, and the tube should be long enough as to minimise the mass flow rate of water vapour through the tube. The tube must not act as a capillary tube.

The present invention provides a convenient technique for minimising diffusion of water vapour into a disk drive apparatus and for expelling water vapour from the disk drive apparatus. The vent tube 24 employed should be long and have a diameter large enough to avoid an excessive pressure drop from developing due to flow therein. Conveniently, commercially available tubes having an internal diameter of the order of 0.01 to (0.25 mm) and greater may be used in lengths of 10 in (25 mm) and greater. The length and diameter of the tube is in part restricted only by their relationship to each other (given the constraints stated herein) and the volume of space within the disk apparatus within which to place the tube.

## Claims

1. A disk drive apparatus having a housing (10) enclosing a rotatable disk and one or more heads for reading and/or writing data on the disk, and a vent tube (24) having an end outside the housing and an end within the housing, the vent tube providing fluid communication between atmosphere (20) surrounding the housing and the interior of the housing, characterised in that the vent tube (24) has an internal diameter large enough so that the effects of surface tension and friction between air and water vapour flowing in the tube and the surface of the tube are not significant, so that the flow of air and water vapour in the tube is substantially laminar and capillary effects are substantially eliminated, in that the vent tube has a length long enough to minimise the mass flow rate of water vapour from the atmosphere to the interior of the housing, and in that the vent tube is such that, in operation, the pressure gradient across the entire length of the tube is not greater than 7 g/cm² (0.1 psi).

2. Apparatus as claimed in claim 1, in which the internal diameter of the vent tube (24) is at least 0.28 mm (0.1 in) and the length of the vent tube is at least 25 cm (10 in).

3. Apparatus as claimed in claim 1 or 2, in which the internal diameter of the vent tube is substantially 0.33 mm (0.013 in) and the length of the vent tube is substantially 51 cm (20 in).

4. Apparatus as claimed in any preceding claim in which the length of the vent tube is greater than the diameter of said disk.

5. Apparatus as claimed in any preceding claim in which the end of the vent tube (24) within the housing (10) is located in a region unaffected by pressure changes in the housing caused by rotation of the disk.

6. Apparatus as claimed in claim 5, in which the housing (10) includes a first chamber (18) containing the disk and heads, and a second chamber (16) containing the end of the vent tube (24) within the housing.

7. Apparatus as claimed in claim 6 including first and second pressure responsive valve means (40, 42) for selectively providing fluid communication between the first and second chambers (18, 16), the first pressure responsive valve means (40), in operation, opening when the fluid pressure in the first chamber exceeds the fluid pressure in the second chamber by a first predetermined amount and closing when the fluid pressure in the first chamber does not exceed the fluid pressure in the second chamber by the first predetermined amount, the second pressure responsive valve means (42), in operation, opening when the fluid pressure in the second chamber exceeds the fluid pressure in the first chamber by a second predetermined amount and closing when the fluid pressure in the second chamber does not exceed the fluid pressure in the first chamber by the second predetermined amount.

8. Apparatus as claimed in any preceding claim, including a desiccant tube (26) within the housing, the desiccant tube being connected to the end of the vent tube, the desiccant tube (26) containing a desiccant material (27) which absorbs water.

9. Apparatus as claimed in claim 6, including heater means (28) for expelling water vapour from the desiccant material (27).

10. Apparatus as claimed in any preceding claim, including a port (70) providing fluid communication between the interior of the housing (10) and the atmosphere (20) surrounding the housing, and thermally-responsive valve means (60) for opening fluid communication through the port (70) when the temperature exceeds a given level and for closing fluid communication through the port when the temperature is less than the given level, so that fluid may be expelled from within the housing through the port when the temperature exceeds the given level.

## Patentansprüche

1. Plattenspeichergerät mit einem Gehäuse (10), das eine in Drehung versetzbare Platte und ein oder mehrere Köpfe zum Lesen und/oder Schreiben von Daten auf der Platte umschließt, und mit einem Be- und Entlüftungsrohr (24), das ein außerhalb des Gehäuses liegendes Ende und ein innerhalb des Gehäuses liegendes Ende aufweist une ein Strömungsmittelverbindung zwischen der das Gehäuse umgebenden Atmosphäre (20) und dem Inneren des Gehäuses herstellt, dadurch gekennzeichnet, daß das Be- und Entlüftungsrohr (24) einen Innendurchmesser aufweist, der groß genug ist, damit die Auswirkungen der Oberflächenspannung und der Reibung zwischen in dem Rohr strömender Luft und Wasserdampf und der Oberfläche des Rohres unbedeutend sind, sodaß die Strömung der Luft und von Wasserdampf in dem Rohr im wesentlichen laminar ist und Kapillareffekte im wesentlichen beseitigt sind, daß das Be- und Entlüftungsrohr eine Länge aufweist, die groß genug ist, um die Massenstromate von Wasserdampf von der Atmosphäre zum Inneren des Gehäuses so gering wie möglich zu machen, und daß das Be- und Entlüftungsrohr derart ausgebildet ist, daß im Betrieb der Druckgradient längs der gesamten Länge des Rohres nich größer als 7 g/cm² (0,1 psi) ist.

2. Plattenspeichergerät nach Anspruch 1, dadurch gekennzeichnet, daß der Innendurchmesser des Be- und Entlüftungsrohres (24) zumindestens 0,28 mm (0,011 in) beträgt und daß die Länge des Be- und Entlüftrungsrohres zumindestens 25 cm (10 in) beträgt.

3. Plattenspeichergerät nach Anspruch 1 oder 2, dadurch gekennzeichnet, daß der Innendurchmesser des Be- und Entlüftungsrohres im wesentlichen gleich 0,33 mm (0,013 in) is und daß die Länge des Be- und Entlüftungsrohres im wesentlichen 51 cm (20 in) beträgt.

4. Plattenspeichergerät nach einem der vorhergehenden Ansprüche, dadurch gekennzeichnet, daß die Länge des Be- und Entlüftungsrohres größer als der Durchmesser der Platte ist.

5. Plattenspeichergerät nach einem der vorhergehenden Ansprüche, dadurch gekennzeichnet, daß das Ende des Be- und Entlüftungsrohres (24) innerhalb des Gehäuses (10) in einem Bereich angeordnet ist, der durch Druckänderungen in dem Gehäuse, die durch die Drehung der Platte hervorgerufen werden, nicht beeinflußt ist.

6. Plattenspeichergerät nach Anspruch 5, dadurch gekennzeichnet, daß das Gehäuse (10) eine erste Kammer (18), die die Platte und die Köpfe enthält, und eine zweite Kammer (16) einschließt, die das Ende des Be- und Entlüftungsrohres (24) innerhalb des Gehäuses enthält.

7. Plattenspeichergerät nach Anspruch 6, dadurch gekennzeichnet, daß Plattenspeichergerät erste und zweite druckabhängige Ventilelemente (40, 42) zur selektiven Ausbildung einer Strömungsmittelverbindung zwischen der ersten und der zweiten Kammer (18, 16) einschließt, daß das erste druckabhängige Ventilelement (40) im Betrieb öffnet, wenn der Strömungsmitteldruck in der ersten Kammer den Strömungsmitteldruck in der zweiten Kammer um einen ersten vorgegebenen Betrag übersteigt, während es schließt, wenn der Strömungsmitteldruck in der ersten Kammer den Strömungsmitteldruck in der zweiten Kammer nicht um den ersten vorgegebenen Betrag übersteigt, und daß das zweite druckabhängige Ventilelement (42) im Betrieb öffnet, wenn der Strömungsmitteldruck in der zweiten Kammer den Strömungsmitteldruck in der ersten Kammer um einen zweiten vorgegebenen Betrag übersteigt, während es schließt, wenn der Strömungsmitteldruck in der zweiten Kammer den Strömungsmitteldruck in der eresten Kammer nicht um den zweiten vorgegebenen Betrag übersteigt.

8. Plattenspeichergerät nach einem der vorhergehenden Ansprüche, dadurch gekennzeichnet, daß es ein Entfeuchtungsrohr (26) im Inneren des Gehäuses einschließt, daß das Entfeuchtungsrohr mit dem Ende de Be- und Entlüftungsrohres in Strömungsmittelverbindung mit der Innenbohrung des Be- und Entlüftungsrohres verbunden ist, und daß das Entfeuchtungsrohre (26) ein Entfeuchtungsmaterial (27) enthält, das Wasser absorbiert.

9. Plattenspeichergerät nach Anspruch 6, gekennzeichnet durch Heizeinrichtungen (28) zum Austreiben von Wasserdampf aus dem Entfeuchtungsmaterial (27).

10. Plattenspeichergerät nach einem der vorhergehenden Ansprüche, gekennzeichnet durch die Öffnung (70), die eine Strömungsmittelverbindung zwischen dem Inneren des Gehäuses (10) und der das Gehäuse umgebenden Atmosphäre (20) ausbildet, und thermisch betätigte Ventilmittelrichtungen (60) zum Öffnen der Strömungsmittelverbindung durch die Öffnung (70), wenn die Temperatur einen vorgegebenen Pegel überschreitet, und zum Schließen der Strömungsmittelverbindung durch die Öffnung, wenn die Temperatur niedriger als der vorgegebene Pegel ist, sodaß Strömungsmittel aus dem Inneren des Gehäuses durch die Öffnung ausgetrieben werden kann, wenn die Temperatur den vorgegebenen Pegel übersteigt.

**Revendications**

1. Appareil de commande de disque comportant un boîtier (10) qui possède un disque rotatif et une ou plusieurs têtes servant à la lecture et, ou bien, à l'écriture de données sur le disque, et un tube d'aération (24) dont une extrémité est l'extérieure de boîtier et une extrémité à l'intérieur du boîtier, le tube d'aération assurant une communication de fluide entre l'atmosphère (20) entourant le boîtier et l'intérieur du boîtier, caractérisé en ce que le tube d'aération (24) possède un diamètre interne suffisamment grand pour que les effets de la tension superficielle et du frottement entre l'air et la vapeur d'eau circulant dans le tube et la surface du tube ne soient pas importants, pour que l'écoulement d'air et de vapeur d'eau dans le tube soit sensiblement laminaire et que les effets de capillarité soient sensiblement éliminés, en ce que le tube d'aération a une longueur suffisante pour minimiser le débit massique de vapeur d'eau depuis l'atmosphère vers l'intérieur du boîtier, et en ce que le tube d'aération est tel que, en fonctionnement, le gradient de pression sur la longueur totale du tube n'est pas supérieur à 7 $g/cm^2$ (0,1 livre par pouce carré).

2. Appareil selon la revendication 1, dans lequel le diamètre interne du tube d'aèration (24) est d'au moins 0,28 mm (0,1 pouce) et la longueur du tube d'aération est d'au moins 25 cm (10 pouces).

3. Appareil selon la revendication 1 ou 2, dans lequel le diamètre interne du tube d'aération est sensiblement 0,33 mm (0,013 pouce) et la longueur du tube d'aération est sensiblement 51 cm (20 pouces).

4. Appareil selon l'une quelconque des revendications précédentes, dans lequel la longueur du tube d'aération est supérieure au diamètre dudit disque.

5. Appareil selon l'une quelconque des revendications précédentes, dans lequel l'extrémité du tube d'aération (24) située à l'intérieur du boîtier (10) est placée dans une région qui n'est pas affectée par les variations de pression provoquées dans le boîtier par la rotation du disque.

6. Appareil selon la revendication 5, dans lequel le boîtier (10) comporte un première chambre (18) qui contient le disque et les têtes, et une deuxième chambre (16) qui contient l'extrémité du tube d'aération (24) située à l'intérieur du boîtier.

7. Appareil selon la revendication 6, comportant des premier et deuxième moyens du type soupape répondant à la pression (40, 42) servant à sélectivement assurer une communication de fluide entre les première et deuxième chambres (18, 16), le premier moyen du type soupape répondant à la pression (40) s'ouvrant, en fonctionnement, lorsque la pression de fluide dans la première chambre dépasse d'une première quantité prédéterminée la pression de fluide de la deuxième chambre et se fermant lorsque la pression de fluide dans la première chambre ne dépasse pas de la première quantité prédéterminée la pression de fluide dans la deuxième chambre, le deuxième moyen de type soupape répondant à la pression (42) s'ouvrant, en fonctionnement, lorsque la pression de fluide dans la deuxième chambre dépasse d'une deuxième quantité prédéterminée la pression de fluide dans la première chambre et se fermant lorsque la pression de fluide dans le deuxième chambre ne dépasse pas de la deuxième quantité prédéterminée la pression de fluide dans la première chambre.

8. Appareil selon l'une quelconque des revendications précédentes, comportant un tube d'agent déshydratant (26) à l'intérieur du boîtier, le tube d'agent déshydrantant étant raccordé à l'extrémité du tube d'aération en communication de fluide avec le trou interne du tube d'aération, le tube d'agent déshydrant (26) contenant un matériau déshydratant (27) qui absorbe l'eau.

9. Appareil selon la revendication 6, comportant un moyen de chauffage (28) servant à expulser la vapeur d'eau du matériau déshydratant (27).

10. Appareil selon l'une quelconque des revendications précédentes, comportant un orifice (70) qui assure un communication de fluide entre l'intérieur du boîtier (10) et l'atmosphère (20) entourant le boîtier, et un moyen du type soupape répondant à la chaleur (60) qui sert à ouvrir une communication de fluide via l'orifice (70) lorsque la température dépasse un niveau donné et à fermer la communication de fluide via l'orifice lorsque la température est inférieur au niveau donné, si bien que du fluide peut être expulsé depuis l'intérieur du boîtier via l'orifice lorsque la température dépasse le niveau donné.